# EUROPÄISCHE PATENTSCHRIFT

(11) **EP 3 156 116 B1**
(45) Veröffentlichungstag und Bekanntmachung des Hinweises auf die Patenterteilung: **07.02.2018**
(21) Anmeldenummer: 16001974.1
(22) Anmeldetag: 09.09.2016
(51) Int. Cl.: B01D 53/04, B01D 53/26, B60T 17/00

(54) **TROCKENMITTELPATRONE**
DRYING AGENT CARTRIDGE
CARTOUCHE DE DESSICATIF

(30) Priorität: 16.10.2015 DE 102015013487
(43) Veröffentlichungstag der Anmeldung: 19.04.2017
(73) Patentinhaber: MAN Truck & Bus AG, 80995 München (DE)
(72) Erfinder: Kaupert, Oliver, 80995 München (DE); Kolland, Wolfgang, 81245 München (DE); Haslberger, Georg, 84437 Reichertsheim (DE); Hofstetter, Thomas, 84048 Mainburg (DE)
(74) Vertreter: v. Bezold & Partner Patentanwälte - PartG mbB

(56) Entgegenhaltungen:
- DE-A1- 4 339 758
- DE-A1- 10 039 631
- DE-A1-102010 011 956
- DE-A1-102012 105 137

## Beschreibung

Die Erfindung betrifft eine Trockenmittelpatrone zur lösbaren Befestigung an einer Druckluftaufbereitungsanlage eines Fahrzeugs, insbesondere eines Nutzfahrzeugs. Die Erfindung betrifft ferner eine Vorrichtung zur lösbaren Befestigung einer Trockenmittelpatrone an einem Gehäuse einer Druckluftaufbereitungsanlage eines Fahrzeugs.

Druckluftsysteme - insbesondere in Nutzfahrzeugen - benötigen nachgeschaltet zum Luftpresser eine sogenannte Druckluftaufbereitungsanlage, nachfolgend auch als Luftaufbereitungsanlage bezeichnet. Darin wird die Luft u. a. getrocknet und gefiltert, und es werden Ölbestandteile abgeschieden. Diese Vorgänge finden alle in einer sogenannten Trockenmittelpatrone statt, die, grob gesagt, aus einer Bodenplatte mit Öffnungen zur Durchströmung der Luft und einem becher- oder topfförmigen Deckel besteht, die fest miteinander verbunden sind. Darin befindet sich ein feuchtigkeitsadsorbierendes Granulat, das der durchströmenden Luft die Feuchtigkeit entzieht. Dieses Granulat hat beim Einsatz im Nutzfahrzeug nur eine begrenzte Lebensdauer. Ein Grund hierfür ist, dass sich der in der Druckluft enthaltene Ölnebel auf dem Granulat absetzt und so die für die Feuchtigkeitsaufnahme effektive Oberfläche reduziert. Ferner kann sich das Granulat durch die Rüttelbeanspruchung mechanisch zersetzen. Die Trockenmittelpatrone muss daher regelmäßig getauscht werden.

Typischerweise ist dafür die Patrone mit einem Mutterngewinde in der Bodenplatte versehen. So lässt sich die verbrauchte Patrone ab- und eine neue Patrone auf ein Außengewinde am Gehäuse der Druckluftaufbereitungsanlage, z. B. am Lufttrocknergehäuse, aufschrauben. Meist wird ein Vierkantdichtring verwendet, der durch die Verschraubung axial verpresst wird, so abdichtet und gleichzeitig die axiale Verspannung der Verschraubung sicherstellt. Derartige Trockenmittelpatronen sind beispielsweise aus den Offenlegungsschriften DE 10 2013 103 066 A1, DE 10 2012 105 137 A1 sowie der DE 10 2007 034 435 A1 bekannt.

Abhängig vom Einbauort der Druckluftaufbereitungsanlage ist oft die Zugänglichkeit der Patrone beim Wechsel eingeschränkt. Die Patrone ist immer oben auf dem Gehäuse der Druckluftaufbereitungsanlage befestigt, deswegen wäre die optimale Zugangsrichtung für den Patronentausch von oben. Diese Freigängigkeit ist aber nicht immer gegeben, bedingt durch Aufbauten bei LKWs oder generell bei Bussen. Außerdem wird oft von unten her gearbeitet, wenn das Fahrzeug in der Werkstatt auf der Grube steht.

Es gibt heute teilweise sehr festsitzende Patronen, bei denen die vorgegebenen Servicezeiten für den Patronentausch in der Werkstatt nicht eingehalten werden können. Man benötigt ein sehr hohes Lösemoment, welches trotz Hilfsmittel, wie z. B. einem Spanngurt mit einem langen Hebel, schwer aufgebracht werden kann, weil der seitliche Freiraum für den Einsatz eines Hebels nicht gegeben ist.

Weil sich das Dichtelement, typischerweise ein Vierkantdichtring, bei den aus der Praxis bekannten Befestigungen zwischen Patronenbodenplatte und Gehäuse der Druckluftaufbereitungseinheit beim Verschrauben mitdrehen muss, kommt es zu großen Schwankungen durch unterschiedliche Reibungseinflüsse beim Anzugsmoment und zur Beschädigung oder zum Verdrehen des Dichtelements, was wiederum Leckagen zur Folge hat. Außerdem muss die axiale Verspannung der Verschraubung durch die Dichtung erzeugt werden.

Es ist somit eine Aufgabe der Erfindung, eine verbesserte Möglichkeit bereitzustellen, um eine Trockenmittelpatrone an einem Gehäuse einer Luftaufbereitungsanlage lösbar befestigen zu können, mit der Nachteile herkömmlicher Techniken vermieden werden können. Die Aufgabe der Erfindung ist es insbesondere, eine Befestigungsschnittstelle für eine Trockenmittelpatrone bereitzustellen, mittels derer die Patrone gegen ein Gehäuse der Luftaufbereitungsanlage, z. B. des Lufttrockners, abgedichtet befestigt, sowie sicher und zuverlässig mit konstantem Kraftaufwand wieder gelöst werden kann.

Diese Aufgaben werden durch eine Trockenmittelpatrone mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die erfindungsgemäße Trockenmittelpatrone, auch als Trocknungspatrone bezeichnet, ist lösbar an einer Druckluftaufbereitungsanlage eines Fahrzeugs, insbesondere eines Nutzfahrzeugs, befestigbar und umfasst in an sich bekannter Weise ein Patronengehäuse, in dem ein Trockenmittelbehälter gehaltert ist. Das Patronengehäuse hat einen Deckel, welcher das Patronengehäuse nach oben begrenzt und typischerweise becher- oder topfförmig ist, und ein Trägerelement, welches das Patronengehäuse nach unten begrenzt. Das Trägerelement ist in Montageposition am Gehäuse der Druckluftaufbereitungsanlage, z. B. am Gehäuse eines Lufttrockners, lösbar befestigt und wird auch als Bodenplatte bezeichnet. Die Patrone umfasst hierzu ein an dem Trägerelement angeordnetes Gewinde zur Verschraubung der Trockenmittelpatrone an einem ein entsprechendes Gegengewinde aufweisenden Gehäuse der Druckluftaufbereitungsanlage.

Gemäß allgemeinen Gesichtspunkten der Erfindung umfasst die Trockenmittelpatrone, nachfolgend auch kurz als Patrone bezeichnet, eine an der Unterseite des Trägerelements angeordnete Dichtungsnut und ein in der Dichtungsnut angeordnetes Dichtelement, um die Patrone im montierten Zustand gegen den Gehäuseabschnitt der Luftaufbereitungsanlage abzudichten. Die Trockenmittelpatrone umfasst ferner eine Fluidverbindung zwischen der Dichtungsnut und einem mit Druck beaufschlagbaren Raum innerhalb der Trockenmittelpatrone, über die das Dichtelement in Montageposition der Trockenmittelpatrone mit einem Systemdruck der Druckluftaufbereitungsanlage beaufschlagbar ist, um die axiale Verpressung des Dichtelements zwischen dem Trägerelement und dem Gehäuseabschnitt durch die Druckbeaufschlagung zu erzeugen und/oder zumindest zu erhöhen. Die Fluidverbindung endet somit einerends in irgendeinem Raum innerhalb des Patronengehäuses, der im Betrieb der Trockenmittelpatrone mit Druckluft aus der Luftaufbereitungsanlage beaufschlagt wird, und anderenends so in der Dichtungsnut, dass das dort angeordnete Dichtungselement mit der über die Verbindungsbohrung anliegenden Druckluft beaufschlagt wird und gegen das Gehäuse der Luftaufbereitungsanlage gedrückt wird.

Dies bietet den Vorzug, dass die eigentliche Dichtwirkung resultierend aus der axialen Verpressung des Dichtelements nicht oder zumindest nicht nur über die Verschraubung, sondern hauptsächlich durch die auf das Dichtelement wirkende pneumatische Druckbeaufschlagung erzeugt wird.

Mit anderen Worten wirkt auf das Dichtelement im verschraubten, jedoch drucklosen Zustand entweder keine oder nur eine erste Axialkraft, die kleiner als die finale Axialkraft ist, die durch die Druckbeaufschlagung des Dichtelements mit dem Systemdruck der Luftaufbereitungsanlage über die Fluidverbindung entsteht, so dass sich im am Gehäuse verschraubten Zustand der Trockenmittelpatrone im drucklosen, d. h. nicht mit Systemdruck beaufschlagten Zustand, eine Grunddichtwirkung einstellt und sich bei der Druckbeaufschlagung des Dichtelements eine zweite Dichtwirkung einstellt, die höher als die Grunddichtwirkung ist. Dadurch kann auf den aus den Stand der Technik bekannten Ansatz, bei dem sich das Dichtelement beim Verschrauben mitdrehen muss, verzichtet werden, so dass die unerwünschten großen Schwankungen durch unterschiedliche Reibungseinflüsse beim Anzugsmoment und die hieraus resultierenden Schwankungen im Lösemoment, die Beschädigungen des Dichtelements und Leckagen vermieden werden.

Die Axialrichtung entspricht der Richtung der Verschraubungsachse bzw. der senkrecht auf dem Trägerelement stehenden Zentralachse der Trockenmittelpatrone. Die Montageposition der Trockenmittelpatrone ist diejenige Position, in der die Trockenmittelpatrone am Gehäuse der Druckluftanlage verschraubt ist.

Die Dichtungsnut ist vorzugsweise eine im Patronenboden bzw. im Trägerelement vertiefte Dichtungsnut, die weiter vorzugsweise als um die Zentralachse der Patrone umlaufende Dichtungsnut und/oder als Ringnut ausgeführt ist. Das Dichtelement ist vorzugweise eine Formdichtung, weiter vorzugsweise ein Dichtring.

Gemäß einer besonders bevorzugten Ausführungsform umfasst die Trockenmittelpatrone einen Anschlag am Patronengehäuse, insbesondere an der Unterseite des Trägerelements, der bei Verschraubung des Patronengehäuses bis auf Anschlag auf das Gehäuse der Druckluftaufbereitungsanlage verschraubbar ist und im auf Anschlag verschraubten Zustand eine vorbestimmte axiale Endlage der Dichtungsnut festlegt. Der Anschlag kann als mindestens eine Anschlagfläche vorgesehen sein. Der Anschlag legt somit einen vorbestimmten Abstand von Dichtungsnut zur Anlagefläche des Gehäuses der Luftaufbereitungsanlage fest und dadurch die Axialkraft, die auf das Dichtelement in einem Zustand, in dem die Patrone auf Anschlag verschraubt ist und noch nicht mit Systemdruck beaufschlagt ist, wirkt. Die auf das Dichtelement wirkende Axialkraft ist somit in diesem Zustand unabhängig vom Anzugsmoment der Verschraubung.

Gemäß einer besonders vorteilhaften Variante dieser Ausführungsform ist der Anschlag so angeordnet, dass sich das Dichtelement bei einer Verschraubung auf Anschlag der Trockenmittelpatrone am Gehäuse nicht mitdreht und so beim Verschrauben nicht oder zumindest nur geringfügig tordiert wird.

Der Anschlag bzw. die Anschlagfläche stellt somit sicher, dass die Trockenmittelpatrone gegen einen harten Anschlag fest verschraubt werden kann und sich dabei sehr konstante Anzugsmomente und entsprechend konstante Lösemomente beim Patronentausch ergeben.

Der Anschlag ist vorzugsweise ein metallisch harter Anschlag und kann als Bauteil der Trockenmittelpatrone, z. B. als ein Abschnitt des Trägerelements, insbesondere des Bodenblechs, ausgeführt sein. Der Anschlag kann radial innenliegend, radial außenliegend zur Dichtungsnut oder beidseits der Dichtungsnut angeordnet sein. Die Radialrichtung ist senkrecht zur vorstehend genannten Axialrichtung.

Gemäß einem weiteren, besonders bevorzugten Ausführungsbeispiel weist das Dichtelement ein Querschnittsprofil auf, das eine selbstverstärkende Dichtwirkung und/oder selbstverstärkende Geometrie unter Druck erzeugt. Bei einer vorteilhaften Variante dieser Ausführungsform weist das Dichtelement im Bereich seiner Anlagefläche an den Bodenbereich der Dichtungsnut vorstehende Wülste und eine Vertiefung zwischen den Wülsten, die über einem in die Dichtungsnut mündenden Endbereich der Fluidverbindung angeordnet ist, auf. Im in der Dichtungsnut eingespannten Zustand wird der Dichtring bei Druckbeaufschlagung so deformiert, dass die Wülste noch stärker seitlich gegen die Randflächen der Ringnut und zum oberen Ende der Ringnut, d. h. in Richtung Gehäuse der Luftaufbereitungsanlage, gedrückt werden. Damit ist ein selbstverstärkender Effekt erzielt.

Ferner ist es vorteilhaft, wenn das Dichtelement im nicht-montierten Zustand der Trockenmittelpatrone aus einem dem Gehäuse zugewandten Randbereich der Dichtungsnut herausragt, so dass sich bereits im drucklosen Zustand durch das Anliegen einer entsprechenden Dichtfläche des Luftaufbereitungsanlagengehäuses an den herausragenden Bereich eine Grunddichtwirkung ergibt.

Die Fluidverbindung kann beispielsweise in Form eines Kanals, insbesondere in Form einer Verbindungsbohrung, vorgesehen sein. Ferner ist es vorteilhaft, wenn die Fluidverbindung in eine umlaufende Vertiefung mündet, die im Boden der Dichtungsnut vorhanden ist, vorzugsweise in einen umlaufenden Ringkanal mündet, der im Boden der als Ringnut ausgeführten Dichtungsnut vorhanden ist. Dadurch wird der Druck besser unter dem Dichtelement verteilt.

Ferner kann die Trockenmittelpatrone eine Druckausgleichsverbindung, beispielsweise in Form eines Kanals, einer Nut oder einer Kerbe, aufweisen, die einen Druckausgleich zwischen einem in Montageposition zwischen dem Dichtelement und dem Anschlag ausgebildeten Spalt bzw. Bereich und der umgebenden Atmosphäre ermöglicht. Alternativ kann eine derartige Druckausgleichsverbindung auch am entsprechenden Gehäuseabschnitt der Luftaufbereitungsanlage vorhanden sein.

Das Trägerelement kann in an sich bekannter Weise eine Trägerplatte und ein Bördelblech bzw. eine Bördelplatte aufweisen, wobei die Befestigung zwischen Trägerplatte und Deckel über das Bördelblech erfolgt. Die Trägerplatte kann eine Einströmöffnung und innerhalb des Gewindes eine zentrale Ausströmöffnung aufweisen, wobei das Gewinde als Mutterngewinde ausgeführt sein kann, um das Trägerelement an einem Außengewinde eines Gehäuses der Druckluftaufbereitungsanlage aufzuschrauben. Das Trägerelement bzw. die Trägerplatte kann z. B. zur Befestigung mit dem Gehäuseabschnitt, z. B. mit dem Trocknergehäuse, an einem die Trockenmittelpatrone axialmittig durchsetzenden Außengewinde des Gehäuseabschnitts löslich gehaltert sein.

Hierbei kann das Bördelblech vorteilhafterweise dazu genutzt werden, die Dichtungsnut durch eine Bördelung des Bördelblechs auszubilden. Ferner kann der Anschlag durch eine Bördelung des Bördelblechs gebildet sein.

Gemäß einem weiteren Gesichtspunkt der Erfindung wird eine Vorrichtung zur lösbaren Befestigung einer Trockenmittelpatrone an einem Gehäuse einer Druckluftaufbereitungsanlage eines Fahrzeugs, insbesondere eines Nutzfahrzeugs, bereitgestellt. Die Vorrichtung stellt eine Schnittstelle zur lösbaren Befestigung einer Trockenmittelpatrone am Gehäuse der Druckluftaufbereitungsanlage dar. Die Vorrichtung umfasst eine erfindungsgemäße Trockenmittelpatrone, wie in diesem Dokument beschrieben, ein Gegengewinde zur Verschraubung der Trockenmittelpatrone, das am Gehäuse der Druckluftaufbereitungsanlage angeordnet ist, sowie eine plane Dichtfläche des Gehäuses, die so am Gehäuse angeordnet ist, dass sie in Montageposition und zumindest im mit Systemdruck beaufschlagten Zustand des Dichtelements an diesem zur Abdichtung anliegt.

Die erfindungsgemäße Schnittstellenvorrichtung zeichnet sich dadurch aus, dass in Montageposition der Trockenmittelpatrone und in einem drucklosen ersten Zustand, in dem das Dichtelement nicht mit einem Systemdruck der Druckluftaufbereitungsanlage über die Fluidverbindung beaufschlagt ist, eine erste Axialkraft auf das Dichtelement wirkt und somit eine erste Dichtwirkung, d. h. eine Grunddichtwirkung, erzielt wird. Ferner, dass in Montageposition der Trockenmittelpatrone und in einem zweiten Zustand, in dem das Dichtelement mit einem Systemdruck der Druckluftaufbereitungsanlage über die Fluidverbindung beaufschlagt ist, eine zweite Axialkraft auf das Dichtelement wirkt, die höher als die erste Axialkraft ist und somit eine zweite Dichtwirkung erzielt wird, die höher als die Grunddichtwirkung ist.

Die Erfindung betrifft ferner ein Fahrzeug, insbesondere ein Nutzfahrzeug, mit einer Trockenmittelpatrone oder Vorrichtung, wie jeweils in diesem Dokument offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben.

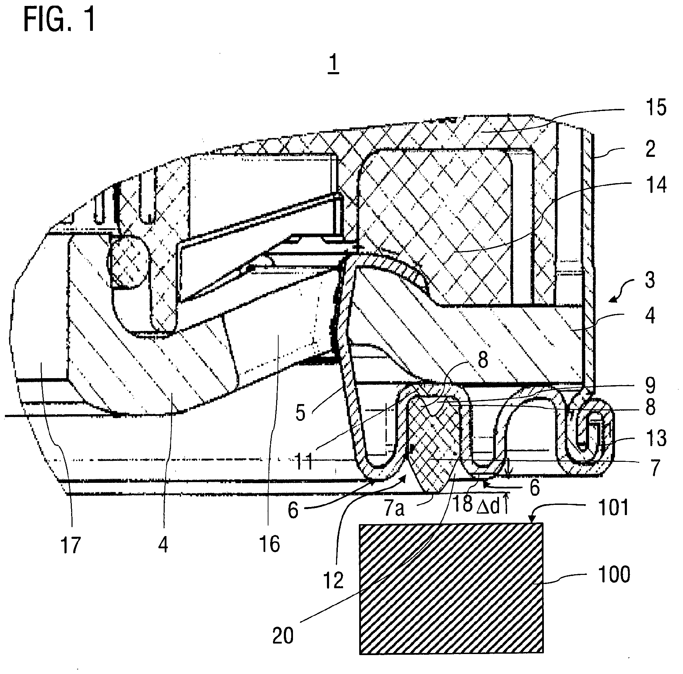

Figur 1 zeigt hierbei eine vergrößerte Detailansicht im Schnitt einer Trockenmittelpatrone gemäß einem Ausführungsbeispiel der Erfindung. Figur 1 zeigt insbesondere einen vergrößerten Ausschnitt eines radial außenliegenden unteren Bereichs einer Trockenmittelpatrone 1. Der innere Aufbau der Trockenmittelpatrone 1 kann in an sich bekannter Weise ausgeführt sein, beispielsweise wie in den Offenlegungsschriften DE 10 2013 103 066 A1, DE 10 2012 105 137 A1 sowie der DE 10 2007 034 435 A1 beschrieben. Mit dem Bezugszeichen 14 ist z. B. der durch ein Vlies gebildete Ölfilter bezeichnet und mit dem Bezugszeichen 15 der Innenbehälter für das Trockenmittel, von dem nur ein kleiner Teil sichtbar ist.

Das Patronengehäuse der Trockenmittelpatrone hat in an sich bekannter Weise einen topf- oder becherförmigen Deckel 2, welcher das Patronengehäuse nach oben begrenzt, und ein Trägerelement 3, z. B. in Form einer Bodenplatte, welches das Patronengehäuse nach unten begrenzt. Das Trägerelement 2 ist in Montageposition an einem Gehäuseabschnitt 100 des Lufttrockners der Druckluftaufbereitungsanlage 1 mittels eines Mutterngewindes an einem die Trockenmittelpatrone axialmittig durchsetzenden Außengewinde (nicht dargestellt) des Gehäuseabschnitts 100 löslich gehaltert. Der Gehäuseabschnitt der Druckluftaufbereitungsanlage, z. B. eines Lufttrockners, ist lediglich schematisiert dargestellt. Der Gehäuseabschnitt erstreckt sich, entgegen der Darstellung in Figur 1, in Montageposition entlang der ganzen Unterseite der Patrone 1, wobei in Figur 1 zur Verdeutlichung der Erfindung nur ein Teilabschnitt des Gehäuses 100 dargestellt ist, der eine plane Dichtfläche 101 aufweist, die so am Gehäuse 100 angeordnet ist, dass sie in Montageposition und an der Stirnfläche 7a des Dichtrings 7 anliegt und so das Patronengehäuse gegenüber dem Gehäuse 100 abdichtet.

Das Trägerelement ist ebenfalls, wie in den Offenlegungsschriften DE 10 2013 103 066 A1, DE 10 2012 105 137 A1 sowie der DE 10 2007 034 435 A1 beschrieben, aus einer Trägerplatte 4 und einem Bördelblech 5 gebildet, wobei die Befestigung zwischen Trägerplatte 4 und dem topfförmigen Außendeckel 2 der Trockenmittelpatrone über das Bördelblech 5 erfolgt, indem der Außendeckel und das Bördelblech 5 miteinander verbördelt werden und dadurch den Patronenfalz 13 ausbilden. Das Trägerelement weist innerhalb des Mutterngewindes eine zentrale Ausströmöffnung 17 auf, über die die getrocknete und gereinigte Luft die Trockenmittelpatrone verlässt. Ferner ist in Figur 1 die Lufteinströmöffnung 16 in der Trägerplatte 4 sowie die zentrale Luftausströmöffnung 37 erkennbar.

Die Besonderheit dieser Ausführungsvariante liegt darin, dass eine ringförmige Dichtungsnut 12 an der Unterseite der Trägerplatte 4 vorhanden ist, die durch eine Bördelung des Bördelblechs 5 gebildet ist. In der Dichtungsnut 12 ist ein Dichtring 7 angeordnet. Ferner ist eine Fluidverbindung in Form einer Verbindungsbohrung 11 vorgesehen, die die Dichtungsnut 12 mit einem mit Druck beaufschlagbaren Raum innerhalb der Trockenmittelpatrone 1 verbindet. Über die Verbindungsbohrung 11 kann das Dichtelement 7 in Montageposition der Trockenmittelpatrone 1 am Gehäuse der Luftaufbereitungsanlage mit einem Systemdruck der Druckluftaufbereitungsanlage beaufschlagt werden. Die Fluidverbindung 11 endet somit einerends in irgendeinem Raum innerhalb des Patronengehäuses, der im Betrieb der Trockenmittelpatrone mit Druckluft aus der Luftaufbereitungsanlage beaufschlagt wird, und anderenends so in der Dichtungsnut 12, dass das dort angeordnete Dichtungselement mit der über die Verbindungsbohrung 11 anliegenden Druckluft beaufschlagt wird und gegen die Anschlagfläche 101 gedrückt wird.

Der Dichtring 7 weist ein Querschnittsprofil auf, das eine selbstverstärkende Dichtwirkung und/oder selbstverstärkende Geometrie unter Druck erzeugt. Dies wird vorliegend dadurch realisiert, dass der Dichtring 7 im Bereich seiner Anlagefläche an den Bodenbereich der Dichtungsnut 12 zwei vorstehende Wülste 8 und eine Vertiefung 9 zwischen den Wülsten 8 aufweist. Die Vertiefung ist dabei über einem in die Dichtungsnut 12 mündenden Endbereich der Fluidverbindung 11 angeordnet. Im in der Ringnut 12 eingespannten Zustand wird der Dichtring 7 bei Druckbeaufschlagung so deformiert, dass die Wülste 8 noch stärker seitlich gegen die Schenkel der Nut 12 und zum offenen Ende der Nut 12 gedrückt werden und sich so gegen die Wände der Nut 12 verpressen. Damit wird ein selbstverstärkender Effekt erzielt.

Ferner ist an der Unterseite der Patrone 1 ein Anschlag 6 am Patronengehäuse vorgesehen, der vorliegend durch eine Bördelung des Bördelblechs 5 gebildet ist und der bei Verschraubung des Patronengehäuses bis auf Anschlag auf das Gehäuse 100 der Druckluftaufbereitungsanlage verschraubbar ist und dann auf der ebenen Dichtfläche 101 des Gehäuses 100 aufliegt. Die durch den Anschlag 6 gebildete Anschlagsfläche legt im auf Anschlag verschraubten Zustand eine vorbestimmte axiale Endlage der Dichtungsnut 12 fest.

Der zwischen dem Dichtring 7 und Anschlag 6 gebildete Ringspalt ist über eine Kerbe oder eine weitere Nut 18 mit einem Bereich verbunden, der immer unter Atmosphärendruck steht, um einen Druckausgleich zu ermöglichen.

In dem vorliegenden Ausführungsbeispiel ragt der Dichtring 7 im nicht-montierten Zustand der Trockenmittelpatrone 1 aus dem dem Gehäuse 100 zugewandten Randbereich der Dichtungsnut 12 um den Überstand Δd etwas heraus, wobei Δd im Bereich von 0,3 bis 0,5 mm liegen kann. Dadurch wird der Dichtring 7 im auf Anschlag verschraubten Zustand etwas in Axialrichtung zusammengedrückt und dadurch axial verpresst. Der Dichtring 7 dreht sich jedoch beim Verschrauben nicht mit und wird nicht oder zumindest nur leicht tordiert. Im drucklosen Zustand ist die Stärke der Verpressung im auf Anschlag verschraubten Zustand im Wesentlichen immer gleich groß, da der Anschlag einen vorbestimmten Abstand zwischen der Spitze 7a des Dichtrings 7 und der Dichtfläche 101 im verschraubten Zustand festlegt.

Die leichte axiale Verpressung des Dichtrings 7 im auf Anschlag verschraubten Zustand der Patrone 1 erzeugt somit eine Grunddichtwirkung. Der Dichtring 7 ist folglich noch nicht vollständig verpresst, solange über die Verbindungsbohrung 7 keine Druckluft anliegt. Die eigentliche Dichtwirkung wird jedoch erst bei Druckbeaufschlagung des Dichtrings 7 mit dem Systemdruck der Luftaufbereitungsanlage über die Verbindungsbohrung erzeugt. Im Betrieb der Luftaufbereitungsanlage wird die Trockenmittelpatrone 1 über die Einströmöffnung 16 mit einem Systemdruck der Luftaufbereitungsanlage, z. B. einem Druck über 6 bar, beaufschlagt. Dieser Druck liegt über die Verbindungsbohrung 11 auch an dem Dichtring 11 an. Bei Druckbeaufschlagung verformt sich zudem der Dichtring 11, wie vorstehend beschrieben, so dass eine starke Axialkraft auf den Dichtring 7 wirkt und diesen verpresst.

Die eigentliche Dichtwirkung entsteht somit nicht schon bei der Verschraubung, sondern erst bei Druckbeaufschlagung des Dichtrings 7. Ferner ermöglicht der Anschlag 6 eine Verschraubung mit einem konstanten Anzugsmoment und ermöglicht entsprechend auch ein konstantes Lösemoment beim Patronentausch. Damit kann eine höhere Sicherheit im Betrieb als auch eine größere Servicefreundlichkeit beim Patronentausch gewährleistet werden, weil das Dichtelement (heute typischerweise ein Vierkantdichtring) beim Verschrauben nicht mitdrehen muss. Schwankungen durch unterschiedliche Reibungseinflüsse beim Anzugsmoment werden vermieden. Beschädigungen oder Verdrehen des Dichtelements, weil es gehäusefest ist und noch nicht vollständig verpresst ist, solange kein Druck ansteht, können ebenfalls vermieden oder zumindest signifikant reduziert werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Trockenmittelpatrone
- 2: Patronengehäusedeckel
- 3: Trägerelement (Patronengehäuseboden)
- 4: Trägerplatte
- 5: Bördelblech
- 6: Anschlag
- 7: Dichtelement, Dichtring
- 7a: Stirnfläche Dichtelement
- 8: Wulst
- 9: Vertiefung
- 11: Verbindungsbohrung
- 12: Dichtungsnut
- 13: Gebördelter Patronenfalz
- 14: Ölfilter
- 15: Trockenmittelbehälter
- 16: Einströmöffnung
- 17: Ausströmöffnung
- 18: Nut oder Kerbe zum Druckausgleich mit Atmosphäre
- Δd: Überstand Anschlag vs. Dichtring
- 100: Gehäuseabschnitt der Druckluftaufbereitungsanlage
- 101: Plane Dichtfläche

## Patentansprüche

1. Trockenmittelpatrone (1) zur lösbaren Befestigung an einer Druckluftaufbereitungsanlage eines Fahrzeugs, insbesondere eines Nutzfahrzeugs, umfassend
ein ein Trockenmittel beinhaltendes Patronengehäuse, mit einem Deckel (2), welcher das Patronengehäuse nach oben begrenzt und einem Trägerelement (3), welches das Patronengehäuse nach unten begrenzt, und in Montageposition am Gehäuse (100) der Druckluftaufbereitungsanlage lösbar befestigt ist;
ein an dem Trägerelement angeordnetes Gewinde zur Verschraubung der Trockenmittelpatrone an einem ein entsprechendes Gegengewinde aufweisenden Gehäuse (100) einer Druckluftaufbereitungsanlage;
eine an der Unterseite des Trägerelements angeordnete Dichtungsnut (12);
ein in der Dichtungsnut (12) angeordnetes Dichtelement (7);
eine Fluidverbindung (11) zwischen der Dichtungsnut (12) und einem mit Druck beaufschlagbaren Raum innerhalb der Trockenmittelpatrone (1), über die das Dichtelement (7) in Montageposition der Trockenmittelpatrone (1) mit einem Systemdruck der Druckluftaufbereitungsanlage beaufschlagbar ist.

2. Trockenmittelpatrone (1) nach Anspruch 1, **gekennzeichnet durch** einen Anschlag (6) am Patronengehäuse, insbesondere an der Unterseite des Trägerelements (3), der bei Verschraubung des Patronengehäuses bis auf Anschlag auf das Gehäuse (100) der Druckluftaufbereitungsanlage verschraubbar ist und im auf Anschlag verschraubten Zustand eine vorbestimmte axiale Endlage der Dichtungsnut (12) festlegt.

3. Trockenmittelpatrone nach Anspruch 2, **dadurch gekennzeichnet, dass** der Anschlag (6) so angeordnet ist, dass sich das Dichtelement (7) bei einer Verschraubung auf Anschlag der Trockenmittelpatrone (1) am Gehäuse (100) nicht mitdreht.

4. Trockenmittelpatrone nach einem der vorhergehenden Ansprüche, **dadurch gekennzeichnet, dass** das Dichtelement (7) ein Querschnittsprofil aufweist, das eine selbstverstärkende Dichtwirkung und/oder selbstverstärkende Geometrie unter Druck erzeugt.

5. Trockenmittelpatrone nach einem der vorhergehenden Ansprüche, **dadurch gekennzeichnet, dass** das Dichtelement (7) im Bereich seiner Anlagefläche an den Bodenbereich der Dichtungsnut (12) vorstehende Wülste (8) und eine Vertiefung (9) zwischen den Wülsten (8), die über einem in die Dichtungsnut (12) mündenden Endbereich der Fluidverbindung angeordnet ist, aufweist.

6. Trockenmittelpatrone nach einem der vorhergehenden Ansprüche, **dadurch gekennzeichnet, dass** das Dichtelement (7) im nicht-montierten Zustand der Trockenmittelpatrone (1) aus einem dem Gehäuse zugewandten Randbereich der Dichtungsnut (12) herausragt.

7. Trockenmittelpatrone nach einem der vorhergehenden Ansprüche, **dadurch gekennzeichnet, dass** die Fluidverbindung
(a) in Form eines Kanals (11), insbesondere in Form einer Verbindungsbohrung, vorgesehen ist; und/oder
(b) in eine umlaufende Vertiefung mündet, die im Boden der Dichtungsnut (12) vorhanden ist, vorzugsweise in einen umlaufenden Ringkanal mündet, der im Boden der als Ringnut ausgeführten Dichtungsnut vorhanden ist.

8. Trockenmittelpatrone nach einem der vorhergehenden Ansprüche, **gekennzeichnet durch** eine Druckausgleichsverbindung (18) in Form eines Kanals, einer Nut oder Kerbe, die einen Druckausgleich zwischen einem in Montageposition zwischen dem Dichtelement (7) und dem Anschlag (6) ausgebildeten Spalt (20) und der umgebenden Atmosphäre ermöglicht.

9. Trockenmittelpatrone nach einem der vorhergehenden Ansprüche, **dadurch gekennzeichnet,**
(a) **dass** das Trägerelement (3) eine Trägerplatte (4) und ein Bördelblech (5) aufweist und die Befestigung zwischen Trägerplatte (4) und Deckel (2) über das Bördelblech (5) erfolgt; und
(b) **dass** die Dichtungsnut (12) durch eine Bördelung des Bördelblechs (5) gebildet ist.

10. Trockenmittelpatrone nach Anspruch 9 und 2, **dadurch gekennzeichnet, dass** der Anschlag (6) durch eine Bördelung des Bördelblechs (5) gebildet ist.

11. Vorrichtung zur lösbaren Befestigung einer Trockenmittelpatrone an einem Gehäuse einer Druckluftaufbereitungsanlage eines Fahrzeugs, insbesondere eines Nutzfahrzeugs, umfassend
eine Trockenmittelpatrone (1) nach einem der vorhergehenden Ansprüche; und
ein Gegengewinde zur Verschraubung der Trockenmittelpatrone am Gehäuse (100), das am Gehäuse (100) der Druckluftaufbereitungsanlage angeordnet ist; und
eine plane Dichtfläche (101) des Gehäuses, die so am Gehäuse (100) angeordnet ist, dass sie in Montageposition und zumindest im mit Systemdruck beaufschlagten Zustand des Dichtelements (7) an diesem zur Abdichtung anliegt

12. Vorrichtung nach Anspruch 11, **dadurch gekennzeichnet, dass** in Montageposition der Trockenmittelpatrone (1) und
(a) in einem ersten Zustand, in dem das Dichtelement (7) nicht mit einem Systemdruck der Druckluftaufbereitungsanlage über die Fluidverbindung (11) beaufschlagt ist, eine erste Axialkraft auf das Dichtelement (7) wirkt; und
(b) in einem zweiten Zustand, in dem das Dichtelement (7) mit einem Systemdruck der Druckluftaufbereitungsanlage über die Fluidverbindung (11) beaufschlagt ist, eine zweite Axialkraft auf das Dichtelement (7) wirkt, die höher als die erste Axialkraft ist.

13. Nutzfahrzeug, mit einer Trockenmittelpatrone nach den Ansprüchen 1 bis 10 oder einer Vorrichtung nach den Ansprüchen 11 bis 12.

## Claims

1. A drying agent cartridge (1) for detachable fastening to a compressed-air treatment installation of a vehicle, in particular of a utility vehicle, comprising
a cartridge housing which contains a drying agent, having a cover (2), which delimits the cartridge housing in an upward direction, and having a carrier element (3) which delimits the cartridge housing in a downward direction and which, in an installed position, is detachably fastened to the housing (100) of the compressed-air treatment installation;
a thread, which is arranged on the carrier element, for the screw connection of the drying agent cartridge to a housing (100), which has a corresponding counterpart thread, of a compressed-air treatment installation;
a seal groove (12) which is arranged on the underside of the carrier element;
a sealing element (7) which is arranged in the seal groove (12);
a fluidic connection (11) between the seal groove (12) and a pressurizable chamber within the drying agent cartridge (1), via which fluidic connection the sealing element (7) can be acted on, when the drying agent cartridge (1) is in an installed position, with a system pressure of the compressed-air treatment installation.

2. The drying agent cartridge (1) according to Claim 1, **characterized by** an abutment (6) on the cartridge housing, in particular on the underside of the carrier element (3), which abutment, during the screwing-on of the cartridge housing, can be screwed on as far as a point of abutment against the housing (100) of the compressed-air treatment installation, and, in the state in which screwing-on has been performed as far as a point of abutment, defines a predetermined axial end position of the seal groove (12).

3. The drying agent cartridge according to Claim 2, **characterized in that** the abutment (6) is arranged such that, during a screwing-on process as far as a point of abutment of the drying agent cartridge (1) against a housing (100), the sealing element (7) does not co-rotate.

4. The drying agent cartridge according to one of the preceding claims, **characterized in that** the sealing element (7) has a cross-sectional profile which generates a self-boosting sealing action and/or a self-reinforcing geometry under pressure.

5. The drying agent cartridge according to one of the preceding claims, **characterized in that** the sealing element (7) has, in the region of its abutment surface against the base region of the seal groove (12), protruding beads (8) and a depression (9) between the beads (8), which depression is arranged above an end region, which opens into the seal groove (12), of the fluidic connection.

6. The drying agent cartridge according to one of the preceding claims, **characterized in that**, in the non-installed state of the drying agent cartridge (1), the sealing element (7) projects out of an edge region, facing toward the housing, of the seal groove (12).

7. The drying agent cartridge according to one of the preceding claims, **characterized in that** the fluidic connection
(a) is provided in the form of a duct (11), in particular in the form of a connecting bore; and/or
(b) opens into an encircling depression which is provided in the base of the seal groove (12), preferably into an encircling ring-shaped duct which is provided in the base of the seal groove formed as a ring-shaped groove.

8. The drying agent cartridge according to one of the preceding claims, **characterized by** a pressure equalization connection (18) in the form of a duct, a groove or notch, which pressure equalization connection permits pressure equalization between a gap (20), which in the installed position is formed between the sealing element (7) and the abutment (6), and the surrounding atmosphere.

9. The drying agent cartridge according to one of the preceding claims, **characterized**
(a) **in that** the carrier element (3) has a carrier panel (4) and a crimped plate (5), and the fastening between carrier panel (4) and cover (2) is realized by way of the crimped plate (5); and
(b) **in that** the seal groove (12) is formed by a crimped formation of the crimped plate (5).

10. The drying agent cartridge according to Claim 9 and 2, **characterized in that** the abutment (6) is formed by a crimped formation of the crimped plate (5).

11. A device for the detachable fastening of a drying agent cartridge to a housing of a compressed-air treatment installation of a vehicle, in particular of a utility vehicle, comprising
a drying agent cartridge (1) according to one of the preceding claims; and
a counterpart thread for the screw connection of the drying agent cartridge to the housing (100), which counterpart thread is arranged on the housing (100) of the compressed-air treatment installation; and
a planar sealing surface (101) of the housing, which planar sealing surface is arranged on the housing (100) such that, in the installed position and at least in the state in which the sealing element (7) is acted on with system pressure, said planar sealing surface bears against said sealing element for sealing purposes.

12. The device according to Claim 11, **characterized in that**, in an installed position of the drying agent cartridge (1) and
(a) in a first state, in which the sealing element (7) is not acted on with a system pressure of the compressed-air treatment installation via the fluidic connection (11), a first axial force acts on the sealing element (7); and
(b) in a second state, in which the sealing element (7) is acted on with a system pressure of the compressed-air treatment installation via the fluidic connection (11), a second axial force which is higher than the first axial force acts on the sealing element (7).

13. A utility vehicle, having a drying agent cartridge according to Claims 1 to 10 or a device according to Claims 11 to 12.

## Revendications

1. Cartouche de dessiccatif (1) pour la fixation amovible à une installation de traitement d'air comprimé d'un véhicule, en particulier d'un véhicule utilitaire, comprenant
un boîtier de cartouche contenant un dessiccatif, avec un couvercle (2) qui limite vers le haut le boîtier de cartouche et un élément de support (3) qui limite vers le bas le boîtier de cartouche et qui est fixé de manière amovible dans la position de montage sur le boîtier (100) de l'installation de traitement d'air comprimé ;
un filetage disposé sur l'élément de support pour visser la cartouche de dessiccatif sur un boîtier (100) d'une installation de traitement d'air comprimé présentant un filetage conjugué correspondant ;
une rainure d'étanchéité (12) disposée au niveau du côté inférieur de l'élément de support ;
un élément d'étanchéité (7) disposé dans la rainure d'étanchéité (12) ;
une liaison fluidique (11) entre la rainure d'étanchéité (12) et un espace pouvant être sollicité en pression à l'intérieur de la cartouche de dessiccatif (1), par le biais de laquelle l'élément d'étanchéité (7), dans la position de montage de la cartouche de dessiccatif (1), peut être sollicité avec une pression de système de l'installation de traitement d'air comprimé.

2. Cartouche de dessiccatif (1) selon la revendication 1, **caractérisée par** une butée (6) sur le boîtier de cartouche, en particulier au niveau du côté inférieur de l'élément de support (3), qui peut être vissée jusqu'à venir en butée sur le boîtier (100) de l'installation de traitement d'air comprimé lors du vissage du boîtier de cartouche, et qui, dans l'état vissé jusqu'à venir en butée, définit une position de fin de course axiale prédéfinie de la rainure d'étanchéité (12).

3. Cartouche de dessiccatif selon la revendication 2, **caractérisée en ce que** la butée (6) est disposée de telle sorte que l'élément d'étanchéité (7) ne tourne pas conjointement lors d'un vissage de la cartouche de dessiccatif (1) jusqu'à venir en butée sur le boîtier (100).

4. Cartouche de dessiccatif selon l'une quelconque des revendications précédentes, **caractérisée en ce que** l'élément d'étanchéité (7) présente un profil en section transversale qui produit un effet d'étanchéité auto-renforçant et/ou une géométrie auto-renforçante sous pression.

5. Cartouche de dessiccatif selon l'une quelconque des revendications précédentes, **caractérisée en ce que** l'élément d'étanchéité (7) présente des bourrelets (8) faisant saillie dans la région de sa surface d'appui contre la région de fond de la rainure d'étanchéité (12) et un renfoncement (9) entre les bourrelets (8), qui est disposé pardessus une région d'extrémité de la liaison fluidique débouchant dans la rainure d'étanchéité (12).

6. Cartouche de dessiccatif selon l'une quelconque des revendications précédentes, **caractérisée en ce que** l'élément d'étanchéité (7), dans l'état non monté de la cartouche de dessiccatif (1), fait saillie hors d'une région de bord de la rainure d'étanchéité (12) tournée vers le boîtier.

7. Cartouche de dessiccatif selon l'une quelconque des revendications précédentes, **caractérisée en ce que** la liaison fluidique
(a) est prévue sous la forme d'un canal (11), en particulier sous la forme d'un alésage de liaison ; et/ou
(b) débouche dans un renfoncement périphérique qui est prévu dans le fond de la rainure d'étanchéité (12), de préférence débouche dans un canal annulaire périphérique qui est prévu dans le fond de la rainure d'étanchéité réalisée sous forme de rainure annulaire.

8. Cartouche de dessiccatif selon l'une quelconque des revendications précédentes, **caractérisée par** une liaison d'équilibrage de la pression (18) sous la forme d'un canal, d'une rainure ou d'une encoche, qui permet un équilibrage de la pression entre une fente (20) réalisée dans la position de montage entre l'élément d'étanchéité (7) et la butée (6) et l'atmosphère environnante.

9. Cartouche de dessiccatif selon l'une quelconque des revendications précédentes, **caractérisée en ce que**
(a) l'élément de support (3) présente une plaque de support (4) et une tôle de bordage (5) et la fixation entre la plaque de support (4) et le couvercle (2) s'effectue par le biais de la tôle de bordage (5) ; et
(b) la rainure d'étanchéité (12) est formée par un bordage de la tôle de bordage (5).

10. Cartouche de dessiccatif selon les revendications 9 et 2, **caractérisée en ce que** la butée (6) est formée par un bordage de la tôle de bordage (5).

11. Dispositif pour la fixation amovible d'une cartouche de dessiccatif sur un boîtier d'une installation de traitement d'air comprimé d'un véhicule, en particulier d'un véhicule utilitaire, comprenant
une cartouche de dessiccatif (1) selon l'une quelconque des revendications précédentes ; et
un filetage conjugué pour le vissage de la cartouche de dessiccatif sur le boîtier (100), qui est disposé sur le boîtier (100) de l'installation de traitement d'air comprimé ; et
une surface d'étanchéité plane (101) du boîtier, qui est disposée sur le boîtier (100) de telle sorte qu'elle s'applique, dans la position de montage, et au moins dans l'état sollicité avec la pression de système de l'élément d'étanchéité (7), contre celui-ci en vue de réaliser l'étanchéité.

12. Dispositif selon la revendication 11, **caractérisé en ce que** dans la position de montage de la cartouche de dessiccatif (1) et
(a) dans un premier état, dans lequel l'élément d'étanchéité (7) n'est pas sollicité par une pression de système de l'installation de traitement d'air comprimé par le biais de la liaison fluidique (11), une première force axiale agit sur l'élément d'étanchéité (7) ; et
(b) dans un deuxième état, dans lequel l'élément d'étanchéité (7) est sollicité par une pression de système de l'installation de traitement d'air comprimé par le biais de la liaison fluidique (11), une deuxième force axiale agit sur l'élément d'étanchéité (7), laquelle est supérieure à la première force axiale.

13. Véhicule utilitaire comprenant une cartouche de dessiccatif selon les revendications 1 à 10 ou un dispositif selon les revendications 11 à 12.
